# EUROPEAN PATENT SPECIFICATION

(11) **EP 1 777 427 B1**
(45) Date of publication and mention of the grant of the patent: **18.03.2009**
(21) Application number: 06254707.0
(22) Date of filing: 09.09.2006
(51) Int. Cl.: F16D 41/30

(54) **Bicycle freewheel**
Freilauf für Fahrrad
Roue libre pour vélo

(30) Priority: 21.10.2005 JP 2005306678
(43) Date of publication of application: 25.04.2007
(73) Proprietor: SHIMANO INC., Osaka 590-8577 (JP)
(72) Inventor: Kanehisa, Takanori c/o Shimano Inc., Osaka 590-8577 (JP)
(74) Representative: Murnane, Graham John

(56) References cited:
- FR-A- 2 749 897
- US-A- 4 838 401
- US-A- 5 921 363
- US-A1- 2005 183 920

## Description

### CROSS-REFERENCE TO RELATED APPLICATIONS

This application claims priority under 35 U.S.C. § 119 to Japanese Patent Application No. 2005-306678.

### BACKGROUND OF THE INVENTION

This invention generally relates to a bicycle freewheel. More specifically, the present invention relates to a bicycle one-way rotation transmission mechanism for use in a bicycle hub having a hub axle and a bicycle freewheel employing the bicycle one-way rotation transmission mechanism.

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. The bicycle drive train has been extensively redesigned.

In many bicycles with multiple speeds, a wheel of the bicycle, typically the rear wheel, is provided with a freewheel that is arranged on a hub of the wheel. The freewheel is arranged either as an integral part of the hub body or as a separate member. The freewheel usually has a one-way clutch function whereby it only transfers torque in one direction. One well-known conventional type of freewheel is provided with a pawl-type one-way clutch that includes ratchet teeth and clutch pawls configured to mesh with the ratchet teeth. In pawl-type one-way clutches, the clutch pawls are forced (spring loaded) toward engaging positions where they mesh with the ratchet teeth. Pawl-type one-way clutches have a characteristic called an "angle of lost motion" which indicates the timing delay with which the clutch pawls reach the engagement angle and mesh with the ratchet teeth. For example, if there is one clutch pawl and the angular distance between adjacent ratchet teeth (i.e., the angular pitch of the ratchet teeth) is 20°, then a maximum possible angle of lost motion of 20° exists between the current position and the position where the clutch pawl meshes with the ratchet tooth.

There is a demand for reducing the angle of lost motion of the one-way clutch as much as possible in the case of road racing bicycles, mountain bikes, and other competition oriented bicycles that are used under such severe conditions as rapid acceleration, extreme variations of the slope of the riding surface, and sharp cornering. Competition oriented bicycles used under severe conditions also require a freewheel that can withstand large loads because the freewheels of such bicycles are subjected to conditions that require a high degree of strength and a high resistance to impact. There are known freewheel configurations that have a small angle of lost motion and satisfy the aforementioned strength requirements (e.g., European Patent Application Publication No. 0777060).

The conventional freewheel structure is disclosed in European Patent Application Publication No. 0777060 (see, Figure 1) that comprises a one-way rotation transmission mechanism having an outer tubular member coupled to a hub body in such a fashion that it can rotate integrally (i.e., as an integral unit) with the hub body, an inner tubular member that is arranged inside the outer tubular member and configured such that a rear sprocket can be mounted on the external circumference thereof, and a pawl-type one-way clutch arranged between the inner tubular member and the outer tubular member. The one-way clutch is provided with a plurality of clutch pawls that are arranged and configured to have an angular phase difference with respect to the ratchet teeth. A force applying member applies forces against the clutch pawls in such directions as to urge the clutch pawls to mesh with the ratchet teeth. The force applying member is made of a metal wire-like material having a spring-like quality that has been bent into a C-shape. The force applying member is arranged so as to apply forces to a plurality of clutch pawls simultaneously.

In the conventional freewheel, a plurality of clutch pawls are arranged such that the clutch pawls are spaced apart in the circumferential direction so as to have an angular phase difference with respect to the ratchet teeth. As a result, the clutch pawls are enabled to mesh with the ratchet teeth after moving through a smaller rotational angle than the angular pitch of the ratchet teeth. In other words, the angle of lost motion is reduced and the angular interval traversed in order for the clutch pawls to mesh with the ratchet teeth is shortened.

With the conventional one-way rotation transmission mechanism described above, the angle of lost motion is reduced and the engagement timing of the one-way clutch is shortened (i.e., made faster). However, since all of the clutch pawls are forced (spring loaded) with a single C-shaped force applying member, there is the possibility that the forces applied to the clutch pawls by the force applying member will become unstable. If the applied forces become unstable, the clutch pawls will not stand up into the engagement position in a stable fashion and there is the possibility that the one-way rotation transmission mechanism will be unable to transfer rotation in a stable fashion.

In view of the above, it will be apparent to those skilled in the art from this disclosure that there exists a need for an improved bicycle freewheel. This invention addresses this need in the art as well as other needs, which will become apparent to those skilled in the art from this disclosure.

A bicycle one-way rotation transmission mechanism according to the preamble of claim 1 is already known from US 2005/0183920.

### SUMMARY OF THE INVENTION

One object of the present invention is to provide a one-way rotation transmission mechanism having a plurality of clutch pawls arranged between an inner tubular member and an outer tubular member, with the one-way rotation transmission mechanism being capable of transmitting rotation in a stable manner with the clutch pawls.

In accordance with a first aspect of the present invention, there is provided a bicycle one-way rotation transmission mechanism that comprises an inner tubular member, an outer tubular member, and a one-way clutch. The inner tubular member is configured to be rotatably couplable to a bicycle hub axle. The outer tubular member is arranged around an outer side circumference of the inner tubular member. The one-way clutch includes a plurality of ratchet teeth, at least two clutch pawls and first and second force applying members. The ratchet teeth are provided on an internal circumferential surface of the outer tubular member. The at least two clutch pawls are circumferentially spaced apart around the outer side circumference of the inner tubular member and freely movable between an engagement position in which the clutch pawls engage the ratchet teeth to transmit torque from the outer tubular member to the inner tubular member and a disengagement position in which the clutch pawls are disengaged from the ratchet teeth. Each clutch pawl includes a claw-like part configured to selectively mesh with the ratchet teeth and a spring engaging part. The first and second force applying members are operable to apply forces against alternate ones of the clutch pawls, respectively, to urge the clutch pawls in a direction oriented away from the outer side circumference of the inner tubular member and to the engagement positions.

The spring engaging part of each pawl is arranged on a side of the claw-like part, and the spring engaging parts of adjacent clutch pawls are provided on opposite sides of the claw-like parts.

With this one-way rotation transmission mechanism, either the inner tubular member or the outer tubular member is coupled to the hub. When the other member (which ever is not coupled to the hub) is rotated in the direction of forward movement of the bicycle, the rotation is transferred to the hub through the clutch pawls and the first member (the member that is coupled to the hub) and the wheel rotates. The n clutch pawls are forced by first and second force applying members in such a fashion that alternate (adjacent) clutch pawls are forced by a different one of the force applying member, i.e., either the first force applying member or the second force applying member, respectively. Thus, the forces applied by the force applying members can be stabilized even when the number of clutch pawls is large because the n clutch pawls can be divided into two groups, each group being forced by a different force applying member. As a result, a plurality of clutch pawls can be urged (forced) toward their respective engagement positions in a stable fashion and rotation (torque) can be transferred through the clutch pawls in a stable fashion.

In accordance with a second aspect of the present invention, there is provided a bicycle freewheel that comprises a one-way rotation transmission mechanism in accordance with the first aspect of the invention.

Preferably the bicycle freewheel includes a pair of bearing assemblies disposed between the inner tubular member and the outer tubular member to couple the outer tubular member to the inner tubular member in a rotatable manner such that the outer tubular member is freely rotatable with respect to the inner tubular member. With this freewheel, rotation of the outer tubular member is transmitted to the hub in a stable fashion through the inner tubular member.

Preferably the outer tubular member includes a sprocket mounting part on an external circumferential surface of the outer tubular member, the sprocket mounting part being configured to mount a sprocket thereon such that the sprocket rotates as an integral unit with the outer tubular member; and the inner tubular member is configured and arranged to be fixable to a hub body such that the inner tubular member is freely rotatable as an integral unit with the hub body about the hub axle. With this freewheel, rotation of the rear sprocket is transmitted in a stable manner from the outer tubular member to the inner tubular member.

Preferably the ratchet teeth and the clutch pawls are arranged between the bearing assemblies. With this bicycle freewheel, since the one-way clutch is arranged between the bearing assemblies, the amount of rotational play is smaller during power transmission and larger loads can be withstood.

With this bicycle freewheel, the forces applied by the force applying members are stabilized and the degree of freedom regarding the design of the claw-like parts is increased.

Preferably two adjacent clutch pawls are angularly spaced apart by a first angular distance that is larger than other angular distances between any other adjacent pair of the clutch pawls among the clutch pawls. With this bicycle freewheel, the angular distance between the first clutch pawl and the last (n^{th}) clutch pawl is larger than the angular distance between any other pair of adjacent clutch pawls. As a result, the degree of design freedom and the degree of arrangement freedom are increased with respect to the force applying members.

Preferably the other angular distances between each of the other adjacent pairs of the clutch pawls among the clutch pawls are equal to one another. With this bicycle freewheel, the strength is maintained in a well-balanced fashion and variation among the forces applied by the force applying members can be suppressed.

Preferably the clutch pawls and the ratchet teeth are configured and arranged such that the maximum number of the clutch pawls that simultaneously mesh with the ratchet teeth is one less than the total number of the clutch pawls. With this bicycle freewheel, the angle of lost motion can be reduced without increasing the number of clutch pawls.

Preferably the maximum number of the clutch pawls that simultaneously mesh with the ratchet teeth is two. With this bicycle freewheel, the angle of lost motion can be reduced while ensuring sufficient rigidity.

Preferably the maximum number of the clutch pawls that simultaneously mesh with the ratchet teeth is one. With this bicycle freewheel, the angle of lost motion can be reduced as much as possible without increasing the original number of clutch pawls.

The forces applied by the force applying members are stabilized to an even greater degree and the degree of freedom regarding the design of the claw-like parts is increased.

With the present invention, the n clutch pawls can be divided into two groups, each group being forced by a different force applying member. Thus, the number of clutch pawls forced by the same force applying member is reduced and the forces applied to individual the clutch pawls can be stabilized even if each force applying member does apply forces to more than one clutch pawl simultaneously. As a result, a plurality of clutch pawls can be urged (forced) toward their respective engagement positions in a stable fashion and rotation (torque) can be transferred through the clutch pawls in a stable fashion.

In accordance with a third aspect of the present invention, there is provided a bicycle hub comprising a hub axle configured and arranged to be fastened to a frame of a bicycle; a hub body rotatably supported around an outside circumference of the hub axle; and a bicycle freewheel in accordance with the second aspect of the invention.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle that is equipped with a rear that includes a freewheel in accordance with a first embodiment of the present invention;
Figure 2 is a half-cross sectional view of the rear hub on which the freewheel is installed in accordance with the first embodiment of the present invention;
Figure 3 is an enlarged half-cross sectional view of the freewheel portion of the rear hub illustrated in Figure 2 in accordance with the first embodiment of the present invention;
Figure 4 is a transverse cross sectional view of the one-way clutch of the freewheel in accordance with the first embodiment of the present invention;
Figure 5 is an enlarged a side elevational view of a clutch pawl of the one-way clutch of the freewheel in accordance with the first embodiment of the present invention;
Figure 6 is a top plan view of the clutch pawl of the one-way clutch of the freewheel in accordance with the first embodiment of the present invention;
Figure 7 is an axial elevational view of a one-way clutch for a bicycle freewheel in accordance with another embodiment of the present invention;
Figure 8 is an axial elevational view, similar to Figure 7, of a one-way clutch for a bicycle freewheel in accordance with another embodiment of the present invention;
Figure 9 is an axial elevational view, similar to Figure 7, of a one-way clutch for a bicycle freewheel in accordance with another embodiment of the present invention;
Figure 10 is an axial elevational view, similar to Figure 7, of a one-way clutch for a bicycle freewheel in accordance with still another embodiment of the present invention;
Figure 11 is an enlarged a side elevational view, similar to Figure 5, of a clutch pawl of the one-way clutch of the freewheel in accordance with still another embodiment of the present invention;
Figure 12 is a top plan view, similar to Figure 6, of a clutch pawl of the one-way clutch of the freewheel in accordance with the embodiment illustrated in Figure 11;
Figure 13 is a side elevational view of a force applying member in accordance with another embodiment; and
Figure 14 is an axial elevational view, similar to Figure 7, of a one-way clutch for a bicycle freewheel in accordance with the embodiment illustrated in Figure 13.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

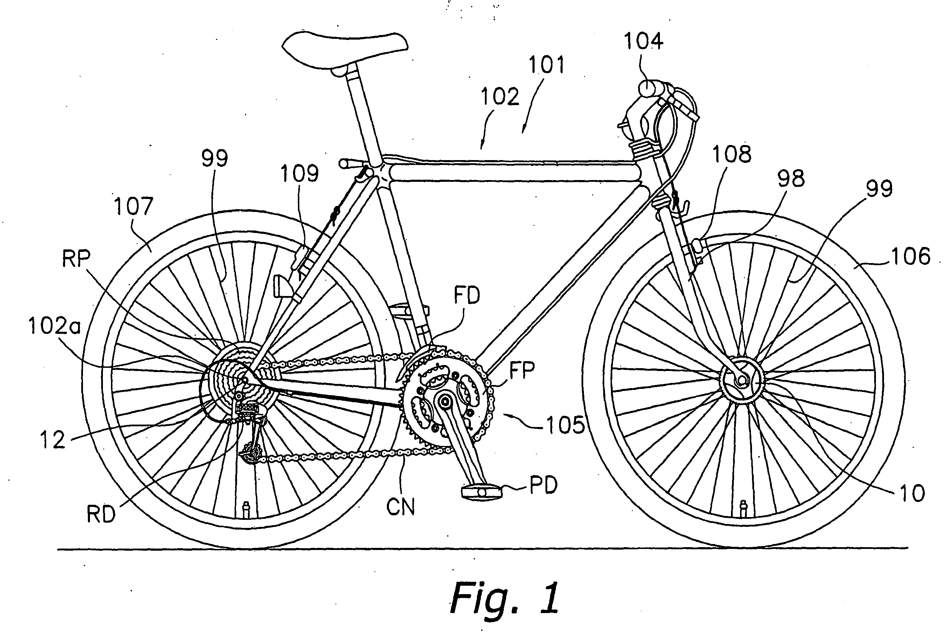

Referring initially to Figure 1, a bicycle 101 is illustrated that is equipped with a front hub 10 and a rear hub 12 in accordance with a first embodiment of the present invention. As seen in Figure 1, the bicycle 101 is arranged as a mountain bike. The bicycle 101 includes a front fork 98, a diamond-shaped frame 102, a handle 104, a drive unit 105, and a pair of front and rear wheels 106 and 107. The frame 102 has the front fork 98 movably coupled thereto. The handle 104 is fixedly coupled to the front fork 98 to turn the front wheel 106. The drive unit 105 basically comprises a chain CN, a pair of pedals PD, a front derailleur FD, a rear derailleur RD, a plurality of front sprockets FP, a plurality of rear sprockets RP and other conventional parts. The front and rear wheels 106 and 107 are coupled to the front fork 98 and the rear portion of the frame 102. Each of the front and rear wheels 106 and 107 includes a plurality of spokes 99. Moreover, the front and rear wheels 106 and 107 are provided with a front brake 108 and rear brake 109, respectively. The front hub 10 is coupled to a center potion of the front wheel 106, and the rear hub 12 is coupled to a center portion of the rear wheel 107.

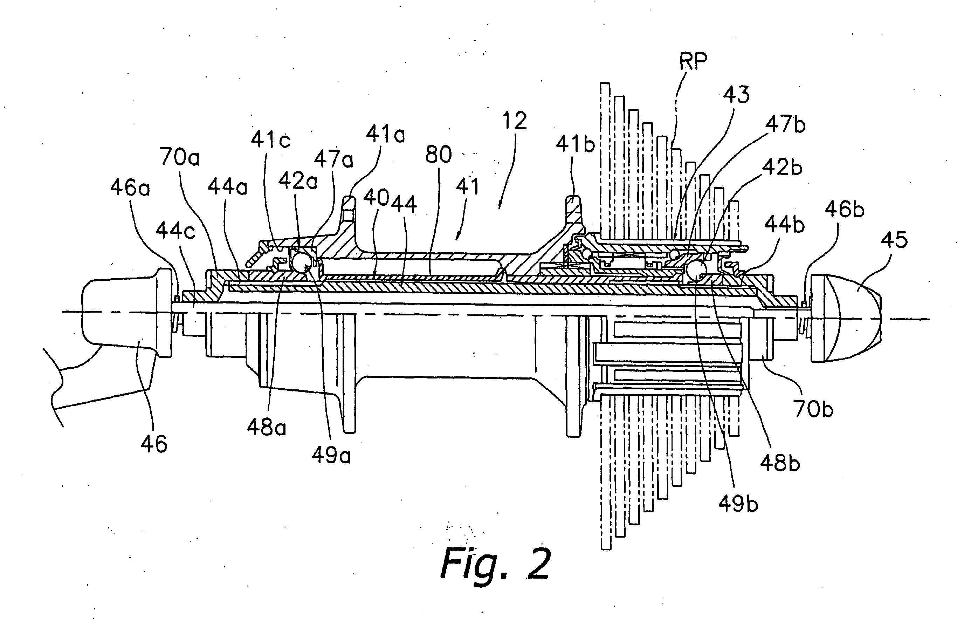

As shown in Figure 2, the rear hub 12 basically has a hub axle 40, a hub body or shell 41, a pair (first and second) of bearing assemblies 42a and 42b and a freewheel 43 in accordance with an embodiment of the present invention. The hub axle 40 is configured to be detachably mounted to a pair of left and right fork ends 102a (see Figure 1) provided on a rearward portion of the frame 102. The hub body 41 is arranged around the outside circumference of the hub axle 40. The freewheel 43 is coupled to the right-hand end of the hub body 41 (when viewed as shown in Figure 2), and has a rear sprocket cluster RP comprising, for example, 10 sprockets mounted thereon such that the sprocket cluster RP can rotate as an integral unit with the freewheel 43. The first and second bearing assemblies 42a and 42b are arranged between the hub axle 40 and the hub body 41 and between the hub axle 40 and the freewheel 43.

The hub axle 40 is a quick-release hub axle having a hollow axle main body 44 that has a right-hand (for example) external thread 44a arranged to span from a position slightly axially inward of the portion where the first bearing assembly 42a is installed to the axially outward end of the axle main body 44. The hollow axle main body 44 also has a right-hand external thread 44b that spans from a position slightly axially inward of the portion where the freewheel 43 is mounted to the axially outward end of the axle main body 44. The hub axle 40 also has a quick-release hub rod 44c, an adjustment nut 45 and a cam lever 46. The quick-release hub rod 44c is arranged so as to pass through the hollow axle main body 44. The adjustment nut 45 screws onto one end of the quick-release hub rod 44c. The cam lever 46 engages with the other end of the quick-release hub rod 44c. A first volute spring 46a is installed between one end (right-hand end in Figure 2) of the axle main body 44 and the adjustment nut 45. A second volute spring 46b is installed between the other end (left-hand end in Figure 2) of the axle main body 44 and the cam lever 46.

The hub body 41 is a generally cylindrical member made of, for example, an aluminum alloy. The hub body 41 has a pair of hub flanges 41a and 41b provided on both ends of the external circumference of the hub body 41. The hub flanges 41 a and 41b are configured for connecting the spokes 99 thereto. A bearing installation section 41c is formed in one end face (left-hand end face in Figure 2) of the hub body 41. The bearing installation section 41c is configured for the first bearing assembly 42a to be installed therein. A grease holding member 80 is installed inside the hub body 41 for preventing grease from escaping from the first bearing assembly 42a.

The first bearing assembly 42a is a ball bearing that comprises a first outer race 47a, a first inner race 48a, and a plurality of spherical bodies (balls) 49a. The spherical bodies (balls) 49a are arranged between the two races 47a and 48a. Similarly, the second bearing assembly 42b is a ball bearing that comprises a second outer race 47b, a second inner race 48b, and a plurality of spherical bodies (balls) 49b. The spherical bodies (balls) 49b are arranged between the two races 47b and 48b. Each set of spherical balls 49a and 49b is held by a retainer (not shown) such that adjacent balls of each set maintain a prescribed circumferential spacing therebetween.

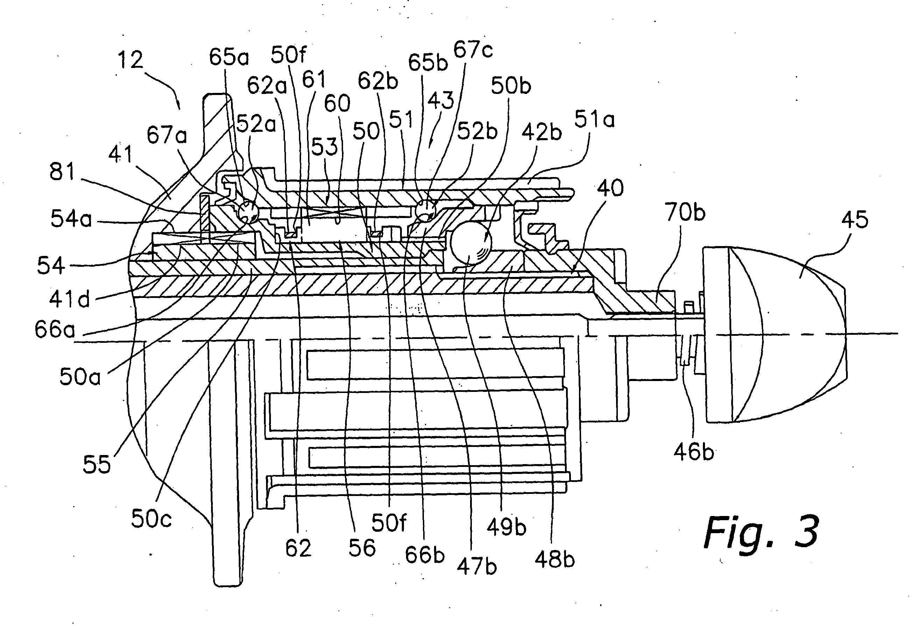

The first outer race 47a is press fitted into the bearing installation section 41c formed in the hub body 41. The second outer race 47b is screwed onto and, thereby, fastened to a bearing installation section 50b (see Figure 3) formed on an inner tubular member 50 (described later). The second outer race 47b also serves as the inner race of a fourth bearing assembly 52b (described later) that serves to support the freewheel 43 in a freely rotatable manner. The first and second inner races 48a and 48b are both screwed onto externally threaded sections 44a and 44b, respectively, that are formed on the axle main body 44 of the hub axle 40 and function as ball pushing members used to adjust the amount of axial play in the bearing assemblies 42a and 42b. Lock nuts 70a and 70b are arranged so as to contact the axially outward facing sides of the first and second inner races 48a and 48b, respectively, and serve to prevent the first and second inner races 48a and 48b from rotating and moving in the axial direction.

As shown in Figure 3, the freewheel 43 comprises a one-way rotation transmission mechanism 56 which comprises an inner tubular member 50, an outer tubular member 51 and a pawl-type one-way clutch 53. The freewheel 43 also includes a third bearing assembly 52a, and a fourth bearing assembly 52b. The inner tubular member 50 is configured to be fixedly coupled to the hub body 41. The outer tubular member 51 is arranged around the outside circumference of the inner tubular member 50. The third and fourth bearing assemblies 52a and 52b are arranged between the inner tubular member 50 and the outer tubular member 51 and configured to couple the outer tubular member 51 to the inner tubular member 50 such that the outer tubular member 51 can rotate freely with respect to the inner tubular member 50. The pawl-type one-way clutch 53 is configured to transfer forward rotation of the outer tubular member 51 (i.e., rotation corresponding to forward movement of the bicycle) to the inner tubular member 50 and not transfer rearward rotation of the outer tubular member 51 to the inner tubular member 50.

The inner tubular member 50 is a step-shaped cylindrical member made of chromium-molybdenum steel or other comparatively high-strength steel material. The inner tubular member 50 is non-rotatably coupled with respect to the hub body 41 by a cylindrical coupling member 54 having serrations 54a formed on the external circumferential surface thereof. Serrations 50a and 41d configured to mesh with the serrations 54a of the coupling member 54 are provided on the internal surface of a larger diameter section of the left-hand end of the inner tubular member 50 (i.e., left-hand end as viewed in Figure 3) and the internal surface of the right-hand end of the hub body 41, respectively. The inner tubular member 50 is fastened to the hub body 41 with a cylindrical bolt 55 configured to pass through the insides of the inner tubular member 50 and the coupling member 54 and screw into the internal surface of the hub body 41. A ball pushing surface 66a constituting the inner race of a third bearing assembly 52a is formed on the external circumferential surface of the larger diameter portion of the inner tubular member 50. The gap between the internal circumferential surface of the cylindrical bolt 55 and the external circumferential surface of the axle main body 44 is very small, e.g., 0.4 mm. A washer 81 is installed between the inner tubular member 50 and the hub body 41.

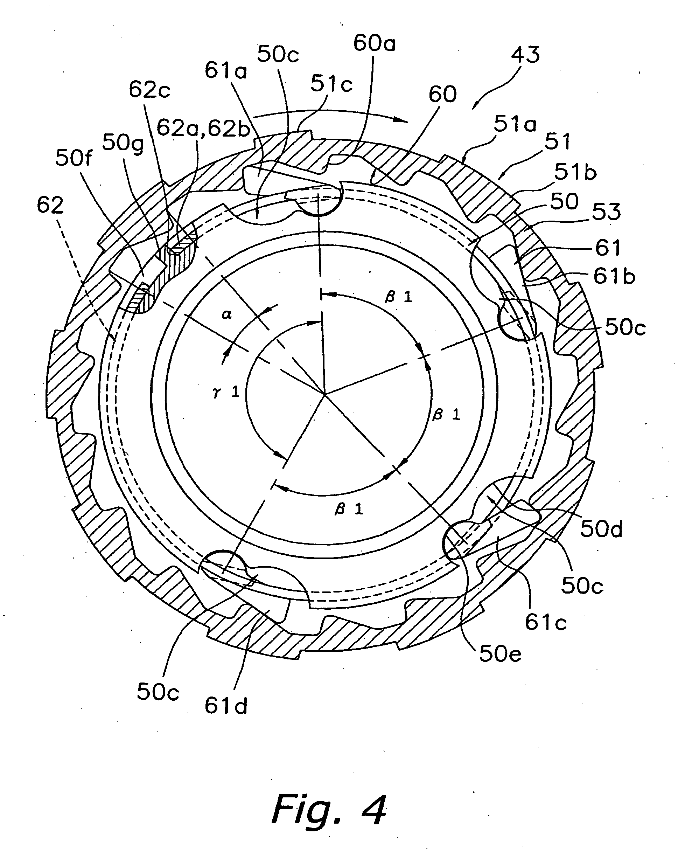

The bearing installation section 50b for installing the second bearing assembly 42b is formed on the external circumferential surface of the right-hand end of the inner tubular member 50 (i.e., the right-hand end when viewed as shown in Figure 3) for installing the second bearing assembly 42b. Clutch pawl installation recesses 50c are formed around a portion of the external circumferential surface of the inner tubular member 50 located further inward in the axial direction than the bearing installation section 50b. The clutch pawl installation recesses 50c are arranged so as to be spaced apart from one another along a circumferential direction and configured such that the four clutch pawls 61 (described later) of the one-way clutch 53 can be pivotally mounted therein. Two spring arrangement grooves 50f are also formed in the external circumferential surface of the inner tubular member 50. The two spring arrangement grooves 50f are configured to run in the circumferential direction and arranged so as to be spaced apart from each other in the axial direction. Both grooves 50f are arranged to cross through the clutch pawl installation recesses 50c. As shown in Figure 4, each of the clutch pawl installation recesses 50c comprises two circular arc-shaped recessed sections 50d and 50e, one larger and one smaller, that are joined together. The smaller recessed section 50e is where the clutch pawl 61 is attached. The inner race of the third bearing assembly 52a is formed on the external circumferential surface of the larger diameter portion of the inner tubular member 50 located on the left-hand end of the inner tubular member 50 (i.e., left-hand end from the perspective of Figure 3) for supporting the outer tubular member 51 in a freely rotatable manner.

The outer tubular member 51 has a sprocket mounting part 51a configured for the rear sprocket cluster RP to be mounted on the external circumference thereof. The outer tubular member 51 is supported in a freely rotatable manner on the external circumference of the inner tubular member 50. As shown in Figure 4, the sprocket mounting part 51a comprises, for example, nine protrusions 51b. One of the protrusions 51c has a smaller width (i.e., dimension in the circumferential direction) than the other protrusions 51b. The outer tubular member 51 is supported in a freely rotatable manner on the inner tubular member 50 by the third and fourth bearing assemblies 52a and 52b. The ball bearing surfaces 65a and 65b that serve as the outer races for the third and fourth bearing assemblies 52a and 52b, respectively, are formed on the internal circumferential surface of the outer tubular member 51 and arranged so as to be spaced apart from each other in the axial direction. The ratchet teeth 60 of the one-way clutch 53 are provided between the ball bearing surfaces 65a and 65b.

The third and fourth bearing assemblies 52a and 52b are arranged between the inner tubular member 50 and the outer tubular member 51 and serve to mount the outer tubular member 51 onto the inner tubular member 50 such that the outer tubular member 51 can rotate freely with respect to the inner tubular member 50. The third bearing assembly 52a is a ball bearing that comprises the ball bearing surface 65a, the ball pushing surface 66a and a plurality of spherical bodies (balls) 67a. The ball bearing surface 65a is formed on the internal circumferential surface of the outer tubular member 51 and serves as an outer race. The ball pushing surface 66a is formed on the external circumferential surface of the inner tubular member 50 and serves as an inner race. The spherical bodies (balls) 67a are arranged between the ball bearing surface 65a and the ball pushing surface 66a. Likewise, the fourth bearing assembly 52b is a ball bearing that comprises the ball bearing surface 65b, the ball pushing surface 66b and a plurality of spherical bodies (balls) 67b. The ball bearing surface 65b is formed on the internal circumferential surface of the outer tubular member 51 and serves as an outer race. The ball pushing surface 66b is formed on the external circumferential surface of the outer race 47b of the second bearing assembly 42b and serves as an inner race. The spherical bodies (balls) 67b are arranged between the ball bearing surface 65b and the ball pushing surface 66b. Each set of spherical balls 67a and 67b is held by a retainer (not shown) such that adjacent balls of each set maintain a prescribed circumferential spacing therebetween.

The one-way clutch 53 serves to transfer only forward rotation of the outer tubular member 51 to the inner tubular member 50. As shown in Figure 4, the one-way clutch 53 includes the ratchet teeth 60, the first to nth (where n is an integer equal to or larger than 3) clutch pawls 61 and a force applying member 62. The ratchet teeth 60 are provided on the internal circumferential surface of the outer tubular member 51. The clutch pawls 61 are arranged on the external circumferential surface of the inner tubular member 50 in such a manner as to be spaced apart from each other along a circumferential direction. The force applying member 62 preferably includes two spring members 62a and 62b that are configured and arranged to apply forces against the clutch pawls 61. The one-way clutch 53 is provided for the purpose of transferring rotation from the outer tubular member 51 to the inner tubular member 50 only when the outer tubular member 51 rotates in the forward direction indicated by an arrow in Figure 4 (i.e., the clockwise direction in Figure 4). Thus, if the inner tubular member 50 rotates in the clockwise direction (i.e., the clockwise direction from the perspective of Figure 4) relative to the outer tubular member 51, the rotation of the inner tubular member 50 will not be transferred to the outer tubular member 51.

The ratchet teeth 60 are arranged on the portion of the internal surface of the outer tubular member 51 that is located between the third and fourth bearing assemblies 52a and 52b. The ratchet teeth 60 are arranged so as to be spaced apart from one another along a circumferential direction. In the embodiment shown in Figure 4, for example, there are eighteen of the ratchet teeth 60 with each of the ratchet teeth 60 being shaped like a saw tooth that is asymmetrical in the circumferential direction and has a wall-like section 60a. Therefore, in this embodiment, adjacent ratchet teeth 60 are separated by an angular distance α of 20°.

In this embodiment, there are four of the clutch pawls 61 arranged to be spaced apart from one another along a circumferential direction. To facilitate explaining the arrangement of the clutch pawls 61, the first to fourth clutch pawls 61 are numbered 61a, 61b, 61c, and 61d and arranged in the clockwise direction in Figure 4. Each of the clutch pawls 61 is mounted in a clutch pawl installation recess 50c of the inner tubular member 50 in such a fashion that it can pivot freely between an engagement position where it engages with one of the ratchet teeth 60 and a disengagement position where it does not engage with the ratchet teeth 60. When the clutch pawls 61 are in the engagement position, torque can be transferred from the outer tubular member 51 to the inner tubular member 50. The first to fourth clutch pawls 61a to 61d are arranged such that the angle of lost motion is 10°.

In order to achieve this angle of lost motion, the clutch pawls 61 are arranged such that the angular distance β1 between the first and second clutch pawls 61a and 61b, the second and third clutch pawls 61b and 61c, and the third and fourth clutch pawls 61c and 61d is smaller than the angular distance γ1 between the first and fourth clutch pawls 61a and 61d (the angular distance γ1 is measured on the opposite side where the second and third clutch pawls 61b and 61c are not located, i.e., all angular distances are measured the direction in which no other clutch pawls exist between the two clutch pawls whose angular distance is being measured). More specifically, in this embodiment, the angular distances β1 between the adjacent pairs of clutch pawls 61a and 61b, 61b and 61c, and 61c and 61d are all 70° and the angular distance γ1 between the first and fourth clutch pawls 61a and 61d is 150°.

By arranging the first to fourth clutch pawls 61a to 61d in this way, the first and third clutch pawls 61a and 61c mesh with the ratchet teeth 60 simultaneously and the second and fourth clutch pawls 61b and 61d mesh with the ratchet teeth 60 simultaneously. More specifically, since the angular distance β1 between each of the adjacent pairs of clutch pawls 61a and 61b, 61b and 61c, and 61c and 61d is 70°, the angular distance between the non-adjacent first and third clutch pawls 61a and 61c is 140° and the angular distance between the non-adjacent second and fourth clutch pawls 61b and 61d is 140°. Since 140 is evenly divisible by 20, the non-adjacent pair of clutch pawls 61a and 61c and the non-adjacent pair of clutch pawls 61b and 61d each mesh with the ratchet teeth simultaneously. Additionally, since the angular distance β1 is 70°, when one of the adjacent clutch pawls 61a and 61b is meshed with one of the ratchet teeth 60, the other is positioned 10° out of phase with the nearest one of the ratchet teeth 60. Likewise, when one of the adjacent clutch pawls 61c and 61d is meshed with one of the ratchet teeth 60, the other is positioned 10° out of phase with the nearest one of the ratchet teeth 60. Consequently, the angle of lost motion is 10°. Since two of the clutch pawls 61 mesh with the ratchet teeth 60 simultaneously, the required rigidity can be maintained while reducing the angle of lost motion.

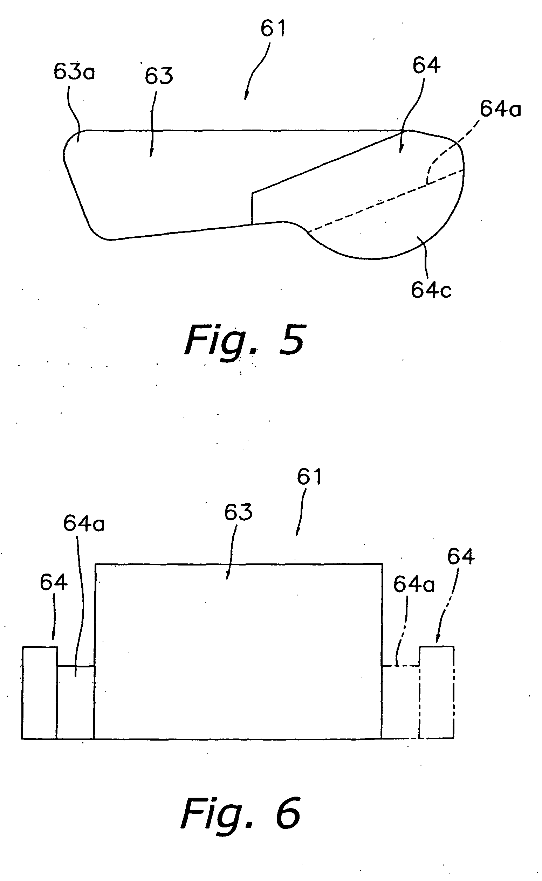

As shown in Figures 5 and 6, each of the clutch pawls 61 has a claw-like part 63 whose tip end portion is configured to mesh with one of the ratchet teeth 60 and a spring engaging part 64 that is formed integrally on a long side of the claw-like part 63. The base end portion 64c of the claw-like part 63 and the spring engaging part 64 is shaped like a circular arc and configured to be mounted in the smaller-diameter recessed section 50e of the clutch pawl installation recess 50c in such a fashion that the clutch pawl 61 can pivot freely. The claw-like part 63 has a tip end section 63a configured to abut against the wall-like section 60a of one of the ratchet teeth 60. A spring engaging groove 64a configured to engage with one of the spring members 62a and 62b of the force applying member 62 is formed in the spring engaging part 64. The spring engaging groove 64a is configured to slant upward to the right when viewed as shown in Figure 5. This configuration enables the clutch pawl 61 to stand up in the engagement position when the force applying member engages with the spring engaging groove 64a. The spring engaging groove 64a is configured such that it can be aligned with one or the other of the two spring arrangement grooves 50f along the circumferential direction when the clutch pawl 61 is mounted in the clutch pawl installation recess 50c. The spring engaging part 64 is formed integrally on one side (left side in Figure 6) or the other side (right side in Figure 6) of the claw-like part 63. The clutch pawls 61 having the spring engaging part 64 provided on the one side and the clutch pawls 61 having the spring engaging part 64 provided on the other side are arranged in an alternating fashion around the external circumference of the inner tubular member 50. In this embodiment, the first and third clutch pawls 61a and 61c have the spring engaging part 64 provided on the one side and the second and fourth clutch pawls 61b and 61d have the spring engaging part 64 provided on the other side.

In this embodiment, the force applying member 62 comprises the two spring members 62a and 62b that are configured and arranged to spring load the first to fourth clutch pawls 61a to 61d simultaneously in a direction oriented away from the external circumference of the inner tubular member 50 and toward the engagement position. Each of the two spring members 62a and 62b is made of a metal elastic wire-like material that has been bent into a C-shape such that it can be installed in one of the circular spring arrangement grooves 50f. Consequently, each of the spring members 62a and 62b has an open end part 62c and is thus shaped like a circle from which one small section has been cut out (i.e., a split ring). As shown in Figure 4, a protrusion 50g is provided in each of the spring arrangement grooves 50f. The protrusions 50g protrude radially outward toward the external surface of the inner tubular member 50 and serve to prevent the spring members 62a and 62b from rotating in the circumferential direction of the inner tubular member 50 within the grooves 50f. Thus, by arranging the open ends 62c of the spring members 62a and 62b at the protrusions 50g, the spring members 62a and 62b can be prevented from rotating and the open end parts 62c can be prevented from being arranged at one of the clutch pawls 61. The spring members 62a and 62b are curved such that the internal diameters thereof are the same or smaller than the external diameters of the bottom surfaces of the spring arrangement grooves 50f. Consequently, each of the spring members 62a and 62b contacts the bottom surfaces of the spring engaging grooves 64a (see Figure 5) that are aligned with the spring arrangement groove 50f in which the respective spring member is arranged. As a result, alternate (adjacent) clutch pawls 61 are spring loaded (urged) toward the engagement position by different spring members 62a or 62b.

More specifically, the spring member 62a spring loads the first clutch pawl 61a and the third clutch pawl 61c and the spring member 62b spring loads the second clutch pawl 61b and the fourth clutch pawl 61d. Thus, by spring loading a plurality of clutch pawls 61 simultaneously with the spring members 62a and 62b in such a fashion that alternate clutch pawls 61 are spring loaded with a different one of the spring members 62a and 62b, respectively, the clutch pawls 61 spring loaded by the spring members (force applying member) 62a and 62b can be divided into two groups. Consequently, the spring members 62a and 62b can apply stable forces to the clutch pawls 61 even when the number of clutch pawls 61 is large. As a result, a plurality of clutch pawls 61 can be urged (spring loaded) toward their respective engagement positions in a stable fashion and rotation (torque) can be transferred through the clutch pawls 61 in a stable fashion.

The operation of the freewheel 43 will now be described. When a rider pedals the pedals PD and rotates the rear sprocket cluster RP, the outer tubular member 51 rotates together with the rear sprocket cluster RP and two of the clutch pawls 61 of the one-way clutch 53 mesh with two of the ratchet teeth 60 of the one-way clutch 53. Since the angle of lost motion is 10°, the outer tubular member 51 will rotate not more than a maximum of 10° before two of the clutch pawls 61 mesh with the ratchet teeth 60 and the rotation of the outer tubular member 51 is transferred to the inner tubular member 50, thereby causing the wheel to rotate. Meanwhile, if the rider stops pedaling the pedals PD, the inner tubular member 50 will rotate relative to the outer tubular member 51 in the direction depicted as the clockwise direction in Figure 4 because the rear wheel 107 is rotating. Clockwise rotation of the inner tubular member 50 is not transferred to the outer tubular member 51 because it acts to move the clutch pawls 61 relative to the ratchet teeth 60 in such a direction that the ratchet teeth 60 push the clutch pawls 61 downward toward the disengaged position.

A typical assembly procedure for the freewheel 43 will now be described. First, the spherical balls 67a of the third bearing assembly 52a, which are held by a retainer, are arranged on the ball pushing surface 66a of the inner tubular member 50. Next, the clutch pawls 61 are mounted in the smaller circular arc-shaped recessed sections 50e of the clutch pawl installation recesses 50c. Clutch pawls 61 having the spring engaging parts 64 provided on opposite sides thereof are arranged adjacent to one another so that the side on which the spring engagement part 64 is provided alternates as one moves from one clutch pawl 61 to another. Then, after putting the clutch pawls 61 in a lying-down state, the inner tubular member 50 is grasped with one hand and the spring members 62a and 62b are installed into the spring arrangement grooves 50f one at a time with the other hand by putting each spring member 62a and 62b onto the inner tubular member 50 from the end of the inner tubular member 50 depicted as the right-hand end in Figure 3. The spring member 62a is installed into the left-hand spring arrangement groove 50f first and the spring member 62b is installed second. The open end parts 62c of the spring members 62a and 62b are arranged at the protrusions 50g of the spring arrangement grooves 50f, thereby preventing rotation of the spring members 62a and 62b. Thus, the four clutch pawls 61a to 61d are spring loaded toward the engagement position by the spring members 62a and 62b in an alternating pattern such that adjacent clutch pawls 61 are not spring loaded by the same spring member 62a or 62b.

After the spherical balls 67a, the clutch pawls 61, and the spring members 62a and 62b have be installed onto the external circumference of the inner tubular member 50 as described above, the inner tubular member 50 is inserted into the outer tubular member 51 from the end depicted as the left-hand end in Figure 3. During the insertion, it is preferable to align the two members 50 and 51 such that two of the clutch pawls 61 mesh with two of the ratchet teeth 60. After inserting the inner tubular member 50, the spherical balls 67b are mounted to the ball pushing surface 66b of the outer race 47b of the second bearing assembly 42b and the outer race 47b is screwed onto the external circumferential surface of the inner tubular member 50. The pressure exerted against the balls 67a and 67b of the third and fourth bearing assemblies 52a and 52b is adjusted by the degree to which the outer race 47b is tightened. The installation of the outer race 47b completes the assembly of the freewheel 43. The freewheel 43 is fastened to the hub body 41 with the washer 81 disposed therebetween. More specifically, first the washer 81 is mounted to the hub body 41 and then the freewheel 43 is coupled non-rotatably to the hub body 41 by mounting it onto the coupling member 54 such that the freewheel 43 abuts against the washer 81. Finally, the freewheel 43 is fastened to the hub body 41 with the cylindrical bolt 55.

Since a separate spring member is not provide for each of the clutch pawls 61 but, instead, a plurality of the clutch pawls 61 are spring loaded simultaneously (together) with one of the spring members 62a and 62b, the internal structure of the freewheel 43 is prevented from becoming complex and the force applying member 62 can be installed more easily during the assembly process of the freewheel 43.

### OTHER EMBODIMENTS

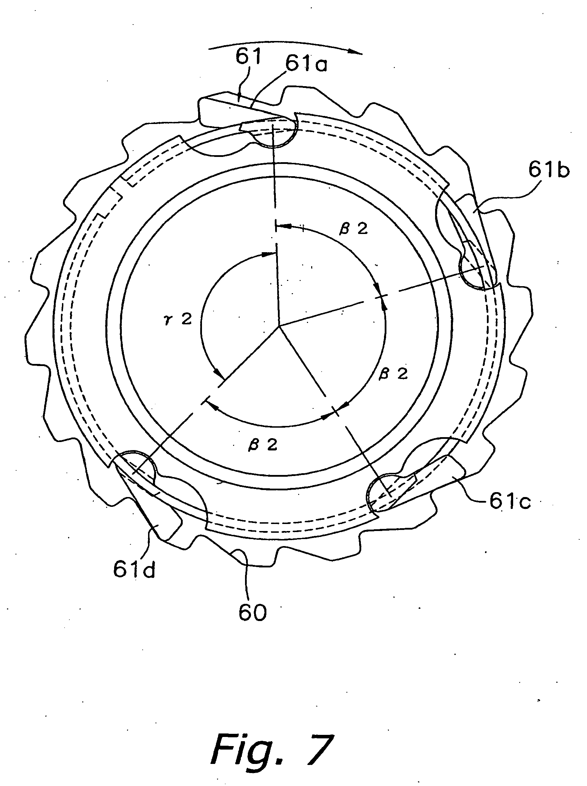

Other embodiments will now be explained with reference to Figures 7-14. In view of the similarity between the embodiments, the parts of the embodiments that are identical to the parts of the first embodiment will be given the same reference numerals as the parts of the first embodiment. Moreover, the descriptions of the parts of the embodiments that are identical to the parts of the first embodiment may be omitted for the sake of brevity.

Although the previously described embodiment is configured such that two of the clutch pawls 61 mesh with the ratchet teeth 60 simultaneously in order to ensure the necessary rigidity while reducing the angle of lost motion, it is acceptable to configure the freewheel such that only one of the clutch pawl 61 meshes with the ratchet teeth 60 at a time in order to achieve a small angle of lost motion.

Figure 7 shows an embodiment in which the clutch pawls 61 are arranged such that the angular distance β2 between the first and second clutch pawls 61a and 61b, the second and third clutch pawls 61b and 61c, and the third and fourth of the clutch pawls 61c and 61d is 75° and the angular distance γ2 between the first and fourth clutch pawls 61a and 61d is 135° (the angular distance γ2 is measured on the opposite side where the second and third clutch pawls 61b and 61c are not located, i.e., all angular distances are measured the direction in which no other clutch pawls exist between the two clutch pawls whose angular distance is being measured).

With this arrangement of the first to fourth clutch pawls 61a to 61d, only one of the first to fourth clutch pawls 61a to 61d meshes with the ratchet teeth 60 at a time. More specifically, since the angular distance β2 between each of the adjacent pairs of the clutch pawls 61a and 61b, 61b and 61c, and 61c and 61d is 75°, there are no two of the clutch pawls 61 that are separated by an angular distance that is evenly divisible by 20°. Consequently, when one of the clutch pawls 61 meshes with one of the ratchet teeth 60, all of the other of the clutch pawls 61 are out of phase with respect to the ratchet teeth 60. Furthermore, since the angular distance β2 is 75°, when the first clutch pawl 61a is meshed with one of the ratchet teeth 60, the second to fourth of the clutch pawls 61b to 61d are arranged so as to be successively closer in 5° increments to meshing with the one of the ratchet teeth 60 that is nearest in the counterclockwise direction. Consequently, the angle of lost motion is 5°. With this bicycle freewheel, since only one of the clutch pawl 61 meshes with the ratchet teeth 60 at a time, the angle of lost motion can be reduced as much as possible without increasing the original number of the clutch pawls.

Also, similarly to the previous embodiment, alternate ones of the clutch pawls 61 are spring loaded by either a first spring member 62a or a second spring member 62b, respectively.

Although the previously described embodiments have four of the clutch pawls 61, the number of the clutch pawls 61 can be any number equal to or larger than 3.

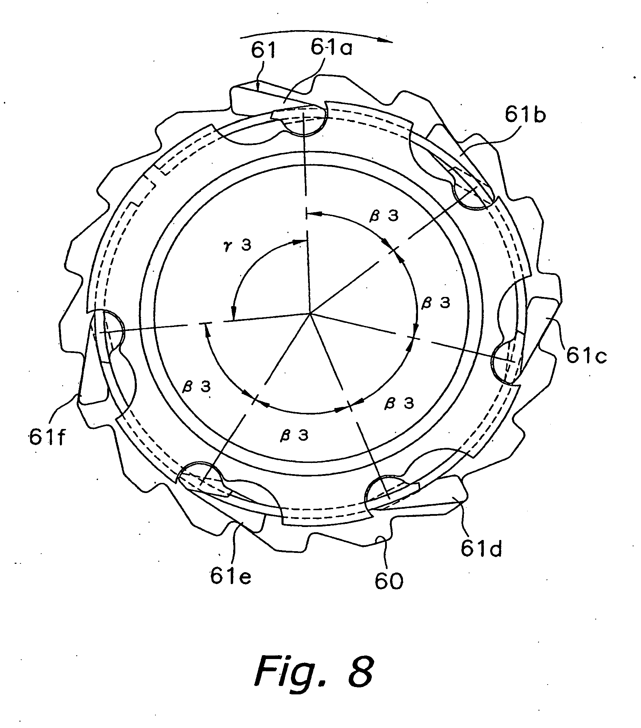

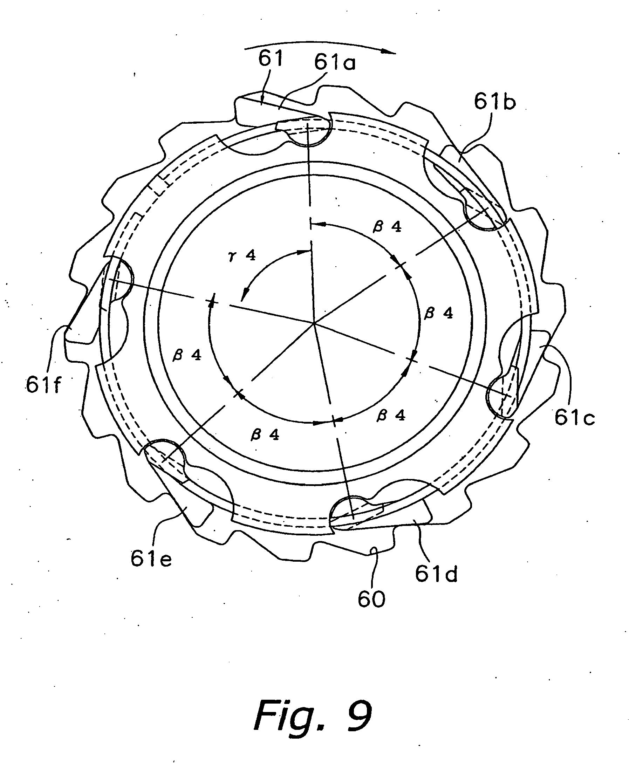

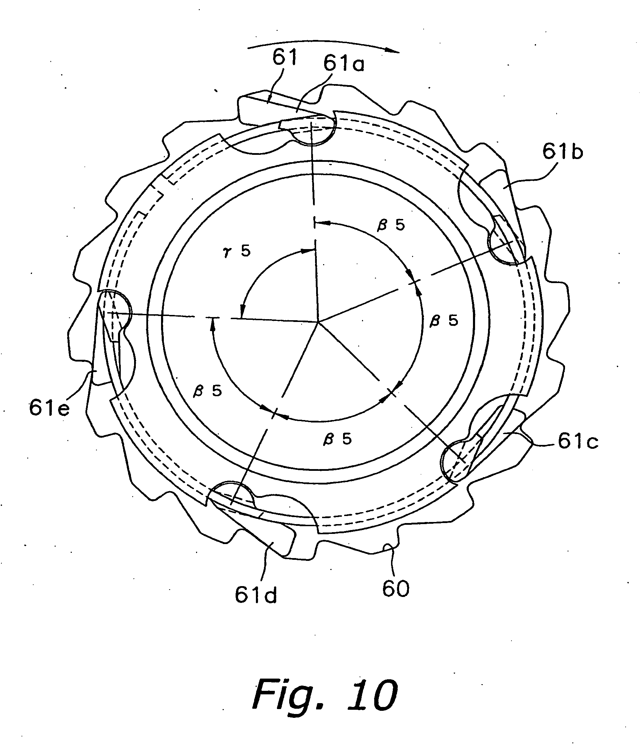

Figures 8 and 9 show embodiments in which there are six of the clutch pawls 61 indicated with the reference numerals 61a to 61f. Figure 10 shows an embodiment in which there are five of the clutch pawls 61 indicated with the reference numerals 61a to 61e. In the embodiment shown in Figure 8, the clutch pawls 61 are arranged such that two of the clutch pawls 61 mesh with the ratchet teeth 60 simultaneously. In the embodiments shown in Figures 9 and 10, only one of the clutch pawls 61 meshes with the ratchet teeth 60 at a time.

In the embodiment shown in Figure 8, the angular distance β3 between each of the adjacent pairs of the clutch pawls 61a and 61b, 61b and 61c, and 61c and 61d, 61d and 61e, and 61e and 61f is 53°20' and the angular distance γ3 between the first and sixth of the clutch pawls 61a and 61f is 93°20'.

With this arrangement of the first to sixth of the clutch pawls 61a to 61f, the following pairs of the clutch pawls 61 mesh with the ratchet teeth 60 simultaneously: the first and fourth clutch pawls 61a and 61d, the second and fifth clutch pawls 61b and 61e, and the third and sixth of the clutch pawls 61c and 61f. More specifically, since the angular distance β3 between each of the adjacent pairs of the clutch pawls 61a and 61b, 61b and 61c, and 61c and 61d, 61d and 61e, and 61e and 61f is 53 °20', the angular distance between the first and fourth of the clutch pawls 61a and 61d is 160°, the angular distance between the second and fifth of the clutch pawls 61b and 61e is 160°, and the angular distance between the third and sixth of the clutch pawls 61a and 61d is 160°. Since 160 is evenly divisible by 20, each of the pairs of the clutch pawls 61 a and 61 d, 61b and 61 e, and 61 c and 61f meshes with the ratchet teeth 60 simultaneously. Additionally, since the angular distance β3 is 53°20', when one of the clutch pawls 61 of any pair of adjacent ones of the clutch pawls 61 (e.g., 61a and 61b or 61b and 61c) is meshed with one of the ratchet teeth 60, the other clutch pawl 61 is positioned 6°40' out of phase with the nearest one of the ratchet teeth 60. Consequently, the angle of lost motion is 6°40'. Since two clutch pawls 61 mesh with the ratchet teeth 60 simultaneously, the required rigidity can be maintained while reducing the angle of lost motion. Additionally, it is also acceptable configure the one-way clutch such that three clutch pawls mesh with the ratchet teeth simultaneously and the angle of lost motion is 10°.

In the embodiment shown in Figure 9, the angular distance β4 between each of the adjacent pairs of the clutch pawls 61a and 61b, 61b and 61c, and 61c and 61d, 61d and 61e, and 61e and 61f is 56°40' and the angular distance γ4 between the first and sixth of the clutch pawls 61a and 61f is 76°40'.

With this arrangement of the first to sixth of the clutch pawls 61a to 61f, only one of the first to sixth of the clutch pawls 61a to 61f meshes with the ratchet teeth 60 at a time. More specifically, since the angular distance β4 between each of the adjacent pairs of the clutch pawls 61a and 61b, 61b and 61c, 61c and 61d, 61d and 61e, and 61e and 61f is 56°40', there are no two of the clutch pawls 61 that are separated by an angular distance that is evenly divisible by 20°. Consequently, when one of the clutch pawls 61 meshes with one of the ratchet teeth 60, all of the other of the clutch pawls 61 are out of phase with respect to the ratchet teeth 60. Furthermore, since the angular distance β4 is 56°40', when the first clutch pawl 61a is meshed with one of the ratchet teeth 60, the second to sixth of the clutch pawls 61b to 61f are arranged so as to be positioned successively closer in 3°20' increments to meshing with the one of the ratchet teeth 60 that is nearest in the counterclockwise direction. Consequently, the angle of lost motion is 3°20'. With this bicycle freewheel, since only one of the clutch pawls 61 meshes with the ratchet teeth 60 at a time, the angle of lost motion can be reduced as much as possible without increasing the original number of clutch pawls.

In the embodiment shown in Figure 10, the angular distance β5 between each of the adj acent pairs of f the clutch pawls 6 1 a and 6 1 b, 61b and 61c, and 61c and 6 1 d, and 61d and 61e is 68° and the angular distance γ5 between the first and fifth clutch pawls 61a and 61e is 88°.

With this arrangement of the first to fifth of the clutch pawls 61a to 61e, only one of the first to fifth of the clutch pawls 61a to 61e meshes with the ratchet teeth 60 at a time. More specifically, since the angular distance β5 between each of the adjacent pairs of the clutch pawls 61a and 61b, 61b and 61c, 61c and 61d, and 61d and 61e is 68°, there are no two of the clutch pawls 61 that are separated by an angular distance that is evenly divisible by 20°. Consequently, when one clutch pawl 61 meshes with one of the ratchet teeth 60, all of the other clutch pawls 61 are out of phase with respect to the ratchet teeth 60. Furthermore, since the angular distance β5 is 68°, when the clutch pawl 61a is meshed with one of the ratchet teeth 60, the clutch pawls 61b to 61e are arranged such that the angular distance between each of the clutch pawls 61b to 61e and the respective one of the ratchet teeth 60 that is nearest in, for example, the counterclockwise direction varies in 4° increments. More specifically, when the first of the clutch pawls 61a meshes with one of the ratchet teeth 60, the fourth of the clutch pawls 61d is positioned 4° away from the nearest one of the ratchet teeth 60 (in the counterclockwise direction from pawl to tooth), the second of the clutch pawls 61b is positioned 8° away from the nearest one of the ratchet teeth 60, the fifth of the clutch pawls 61e is positioned 12° away from the nearest one of the ratchet teeth 60, and the third of the clutch pawls 61c is positioned 16° away from the nearest one of the ratchet teeth 60. Consequently, the angle of lost motion is 4°. With this bicycle freewheel, since only one of the clutch pawls 61 meshes with one of the ratchet teeth 60 at a time, the angle of lost motion can be reduced as much as possible without increasing the original number of clutch pawls. It is also possible to obtain an angle of lost motion equal to 4° by setting both of the angular distances β5 and γ5 to 72° such that the first to fifth of the clutch pawls 61a to 61e are all equally spaced apart.

Also, similarly to the previously described embodiment, in the embodiments shown in Figures 8 to 10, alternate ones of the clutch pawls 61 are spring loaded by the first and second spring members 62a and 62b, respectively. Also, in the embodiment shown in Figure 10, since the number of the clutch pawls 61 is odd, the first spring member 62a spring loads the first, third, and fifth of the clutch pawls 61a, 61c, 61e (a total of three clutch pawls) while the second spring member 62b spring loads the second and fourth of the clutch pawls 61b and 61d (a total of two clutch pawls).

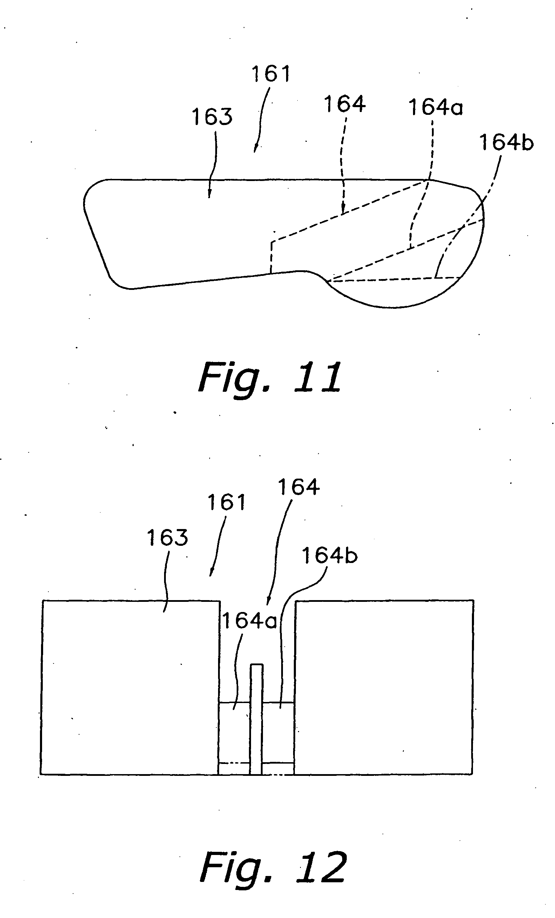

Although in the previously described embodiment the spring engaging part 64 of each clutch pawl 61 is arranged on a side portion of the claw-like part 63 of the clutch pawl 61, the invention is not limited to such an arrangement of the spring engagement parts. Figures 11 and 12 show another embodiment in which the spring engaging part 164 is arranged in a middle portion along the lengthwise direction (horizontal direction in Figure 11) of the claw-like part 163 of the clutch pawl 161. In this embodiment, two spring engaging grooves 164a are arranged in a middle portion of the claw-like part 163 in such a fashion as to be spaced apart from each other along the axial direction.

The spring engaging groove 164a indicated with a broken line is configured to slant upward to the right when viewed as shown in Figure 11. This configuration enables the clutch pawl 161 to be spring loaded toward the engagement position in the same manner as in the previously described embodiment by one of the spring members 62a and 62b. Meanwhile, the other spring engaging groove 164b indicated with a double-dot chain line is configured to be approximately horizontal when viewed as shown in Figure 11 so that the clutch pawl 161 is not spring loaded by the other of the two spring members 62a and 63b.

In this embodiment, clutch pawls 161 having spring the engagement grooves 164a and 164b configured as indicated with the solid lines in Figure 12 and the clutch pawls 161 having the spring engagement grooves 164a and 164b reversed as indicated with the double-dot chain lines in Figure 12 are arranged in an alternating fashion. As a result, a plurality of alternate clutch pawls 161 are spring loaded by two spring members 62a and 62b, respectively.

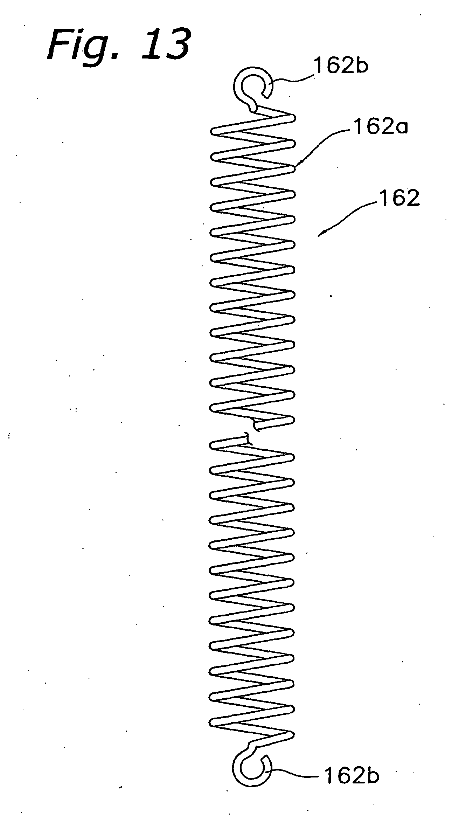

Although in the previously described embodiment two C-shaped spring members 62a and 62b are used as the force applying member 62, the invention is not limited to such a force applying member 62. Figure 13 shows another embodiment in which the force applying member 162 is a coil spring 162a having a hook 162b at each of both ends thereof. Since the clutch pawls can be spring loaded by the extension and contraction of the coil spring 162a, the clutch pawls can be made to stand up with generally uniform amounts of force (little variation of force) even if the clutch pawls are spring loaded using a single coil spring 162a instead of spring loading alternate clutch pawls 61 with separate spring members. When using a coil spring 162a, the spring engaging parts can all be arranged on the same sides of the claw-like parts or in center portions of the claw-like parts. When the spring engaging parts are to be arranged on one side (the same side) of each of the claw-like parts, the coil spring 162a will be easier to install if the spring engaging parts are provided on the side corresponding to the right-hand side when viewed as shown in Figure 3. It is also acceptable to provide two coil springs arranged to spring load alternate clutch pawls 61.

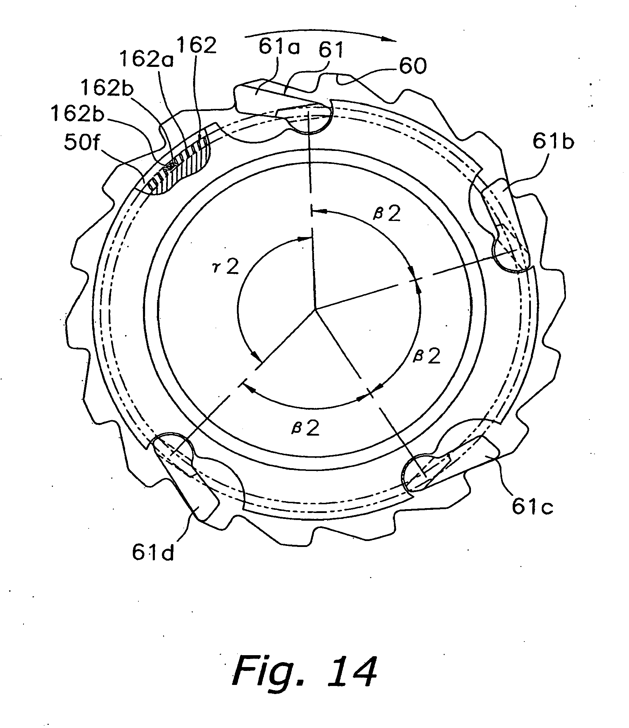

The length of the coil spring 162a is set such that the coil spring 162a is elongated beyond its natural length when it is installed with the hooks 162b hooked together. The coil spring 162a is installed by hooking the hooks 162b together and placing the coil spring 162a into the spring arrangement groove 50f from the end of the inner tubular member 50 depicted as the right-hand end in Figure 3. Figure 14 shows the installed state of the coil spring 162a.

Although in the previous embodiment a rear sprocket mounting part 51 a is provided on the outer tubular member 51 of the one-way rotation transmission mechanism 56, it is also acceptable to provide a rear sprocket mounting part on the inner tubular member. In such a case, the outer tubular member is coupled non-rotatably to the hub body (or the outer tubular member is formed as an integral unit with the hub body). Also, the third and fourth bearing assemblies are arranged between the hub body or hub axle and the inner tubular member and the rotation of the inner tubular member is transferred to the outer tubular member through the one-way clutch. Here, too, rotation can be transferred smoothly from the inner tubular member to the outer tubular member by applying forces to alternate clutch pawls with one or the other of two force applying members.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle one-way rotation transmission mechanism (56) comprising:
an inner tubular member (50) configured to be rotatably couplable to a bicycle hub axle (40);
an outer tubular member (51) arranged around an outer side circumference of the inner tubular member (50);
a one-way clutch (53) including a plurality of ratchet teeth (60) provided on an internal circumferential surface of the outer tubular member (51), at least two clutch pawls (61) circumferentially spaced apart around the outer side circumference of the inner tubular member (50) and freely movable between an engagement position in which the clutch pawls (61) engage the ratchet teeth (60) to transmit torque from the outer tubular member (51) to the inner tubular member (50) and a disengagement position in which the clutch pawls (61) are disengaged from the ratchet teeth (60), each clutch pawl (61) including a claw-like part (63) configured to selectively mesh with the ratchet teeth (60) and a spring engaging part (64); and
first and second force applying members (62a, 62b) operable to apply forces against alternate ones of the clutch pawls (61), respectively, to urge the clutch pawls (61) in a direction oriented away from the outer side circumference of the inner tubular member (50) and to the engagement positions, the spring engaging parts (64) of each clutch pawl (61) being engageable with one of the first and second force applying members (62a, 62b),
**characterised in that** the spring engaging part (64) of each clutch pawl (61) is arranged on a side of the claw-like part (63), and the spring engaging parts (64) of adjacent clutch pawls (61) are provided on opposite sides of the claw-like parts (63).

2. A bicycle freewheel (43) comprising a one-way rotation transmission mechanism as recited in claim 1.

3. A bicycle freewheel (43) as recited in claim 2 comprising a pair of bearing assemblies (52a, 52b) disposed between the inner tubular member (50) and the outer tubular member (51) to couple the outer tubular member (51) to the inner tubular member (50) in a rotatable manner such that the outer tubular member (51) is freely rotatable with respect to the inner tubular member (50).

4. The bicycle freewheel (43) as recited in claim 2 or 3, wherein
the outer tubular member (51) includes a sprocket mounting part (51a) on an external circumferential surface of the outer tubular member (51), the sprocket mounting part (51a) being configured to mount a sprocket thereon such that the sprocket rotates as an integral unit with the outer tubular member (51); and
the inner tubular member (50) is configured and arranged to be fixable to a hub body (41) such that the inner tubular member (50) is freely rotatable as an integral unit with the hub body (41) about the hub axle (40).

5. The bicycle freewheel (43) as recited in claim 3, wherein
the ratchet teeth (60) and the clutch pawls (61) are arranged between the bearing assemblies (52a, 52b).

6. The bicycle freewheel (43) as recited in any of claims 2 to 5, wherein
two adjacent clutch pawls (61) are angularly spaced apart by a first angular distance γ1 that is larger than other angular distances β1 between any other adjacent pair of the clutch pawls (61).

7. The bicycle freewheel (43) as recited in claim 6, wherein
the other angular distances β1 between each of the other adjacent pairs of the clutch pawls (61) among the clutch pawls are equal to one another.

8. The bicycle freewheel (43) as recited in any of claims 2 to 7, wherein
the clutch pawls (61) and the ratchet teeth (60) are configured and arranged such that the maximum number of the clutch pawls (61) that simultaneously mesh with the ratchet teeth (60) is one less than the total number of the clutch pawls (61).

9. The bicycle freewheel (43) as recited in any of claims 2 to 8, wherein
the maximum number of the clutch pawls (61) that simultaneously mesh with the ratchet (60) teeth is two.

10. The bicycle freewheel (43) as recited in any of claims 2 to 8, wherein
the maximum number of the clutch pawls (61) that simultaneously mesh with the ratchet teeth (60) is one.

11. A bicycle hub (12) comprising:
a hub axle (40) configured and arranged to be fastened to a frame (102) of a bicycle (101);
a hub body (41) rotatably supported around an outside circumference of the hub axle (40); and
a bicycle freewheel (43) as recited in any of claims 2 to 10.

## Patentansprüche

1. Ein Einwegdrehungsübertragungsmechanismus (56) für ein Fahrrad, der Folgendes beinhaltet:
ein inneres röhrenförmiges Element (50), das konfiguriert ist, um drehbar an eine Fahrradnabenachse (40) gekoppelt werden zu können;
ein äußeres röhrenförmiges Element (51), das um einen äußeren Seitenumfang des inneren röhrenförmigen Elements (50) eingerichtet ist;
eine Einwegkupplung (53), die Folgendes umfasst: eine Vielzahl von Rastzähnen (60), die auf einer internen Umfangsoberfläche des äußeren röhrenförmigen Elements (51) bereitgestellt sind, mindestens zwei Kupplungssperrklinken (61), die um den äußeren Seitenumfang des inneren röhrenförmigen Elements (50) im Umfang mit Abstand voneinander angeordnet sind und sich zwischen einer Eingriffsposition, in der die Kupplungssperrklinken (61) in die Rastzähne (60) eingreifen, um ein Drehmoment von dem äußeren röhrenförmigen Element (51) auf das innere röhrenförmige Element (50) zu übertragen, und einer Auskupplungsposition, in der die Kupplungssperrklinken (61) von den Rastzähnen (60) ausgekuppelt sind, frei bewegen können, wobei jede Kupplungssperrklinke (61) einen klauenartigen Teil (63), der konfiguriert ist, um selektiv mit den Rastzähnen (60) ineinander zu greifen, und einen Federeingriffsteil (64) umfasst; und
ein erstes und ein zweites Kraft anwendendes Element (62a, 62b), die betriebsfähig sind, auf abwechselnde Kupplungssperrklinken (61) jeweils Kraft anzuwenden, um die Kupplungssperrklinken (61) in eine Richtung, die von dem äußeren Seitenumfang des inneren röhrenförmigen Elements (50) weg ausgerichtet ist, und zu den Eingriffspositionen zu drängen, wobei die Federeingriffsteile (64) jeder Kupplungssperrklinke (61) in eines von dem ersten und dem zweiten Kraft anwendenden Element (62a, 62b) eingreifen können,
**dadurch gekennzeichnet, dass** der Federeingriffsteil (64) jeder Kupplungssperrklinke (61) auf einer Seite des klauenartigen Teils (63) eingerichtet ist und die Federeingriffsteile (64) von benachbarten Kupplungssperrklinken (61) auf gegenüberliegenden Seiten der klauenartigen Teile (63) bereitgestellt sind.

2. Ein Fahrradfreilauf (43), der einen Einwegdrehungsübertragungsmechanismus gemäß Anspruch 1 beinhaltet.

3. Fahrradfreilauf (43) gemäß Anspruch 2, der ein Paar Lageranordnungen (52a, 52b) beinhaltet, die zwischen dem inneren röhrenförmigen Element (50) und dem äußeren röhrenförmigen Element (51) angeordnet sind, um das äußere röhrenförmige Element (51) auf eine drehbare Art und Weise an das innere röhrenförmige Element (50) zu kuppeln, so dass das äußere röhrenförmige Element (51) in Bezug auf das innere röhrenförmige Element (50) frei drehbar ist.

4. Fahrradfreilauf (43) gemäß Anspruch 2 oder 3, wobei
das äußere röhrenförmige Element (51) auf einer externen Umfangsoberfläche des äußeren röhrenförmigen Elements (51) einen Kettenradmontageteil (51a) umfasst, wobei der Kettenradmontageteil (51 a) für die Montage des Kettenrads darauf konfiguriert ist, so dass sich das Kettenrad als eine integrale Einheit mit dem äußeren röhrenförmigen Element (51) dreht; und
das innere röhrenförmige Element (50) konfiguriert und eingerichtet ist, um an einem Nabenkörper (41) fixiert werden zu können, so dass das innere röhrenförmige Element (50) als eine integrale Einheit mit dem Nabenkörper (41) um die Nabenachse (40) frei drehbar ist.

5. Fahrradfreilauf (43) gemäß Anspruch 3, wobei
die Rastzähne (60) und die Kupplungssperrklinken (61) zwischen den Lageranordnungen (52a, 52b) eingerichtet sind.

6. Fahrradfreilauf (43) gemäß einem der Ansprüche 2 bis 5, wobei
zwei benachbarte Kupplungssperrklinken (61) über einen ersten Winkelabstand γ1, der größer als andere Winkelabstände β1 zwischen einem beliebigen anderen benachbarten Paar der Kupplungssperrklinken (61) ist, im Winkel im Abstand voneinander angeordnet sind.

7. Fahrradfreilauf (43) gemäß Anspruch 6, wobei
die anderen Winkelabstände β1 zwischen jedem der anderen benachbarten Paare der Kupplungssperrklinken (61) von den Kupplungssperrklinken einander gleich sind.

8. Fahrradfreilauf (43) gemäß einem der Ansprüche 2 bis 7, wobei
die Kupplungssperrklinken (61) und die Rastzähne (60) so konfiguriert und eingerichtet sind, dass die maximale Anzahl der Kupplungssperrklinken (61), die gleichzeitig mit den Rastzähnen (60) ineinander greifen, eins weniger als die Gesamtzahl der Kupplungssperrklinken (61) ist.

9. Fahrradfreilauf (43) gemäß einem der Ansprüche 2 bis 8, wobei
die maximale Anzahl der Kupplungssperrklinken (61), die gleichzeitig mit den Rastzähnen (60) ineinander greifen, zwei ist.

10. Fahrradfreilauf (43) gemäß einem der Ansprüche 2 bis 8, wobei
die maximale Anzahl der Kupplungssperrklinken (61), die gleichzeitig mit den Rastzähnen (60) ineinander greifen, eins ist.

11. Eine Fahrradnabe (12), die Folgendes beinhaltet:
eine Nabenachse (40), die konfiguriert und eingerichtet ist, um an einem Rahmen (102) eines Fahrrads (101) befestigt zu werden;
einen Nabenkörper (41), der um einen Außenumfang der Nabenachse (40) drehbar gestützt ist; und
einen Fahrradfreilauf (43) gemäß einem der Ansprüche 2 bis 10.

## Revendications

1. Un mécanisme de transmission de rotation unidirectionnelle pour bicyclette (56) comprenant :
un élément tubulaire interne (50) configuré pour pouvoir être couplé de façon rotative à un essieu de moyeu de bicyclette (40) ;
un élément tubulaire externe (51) arrangé autour d'une circonférence de côté externe de l'élément tubulaire interne (50) ;
un embrayage unidirectionnel (53) comportant une pluralité de dents de rochet (60) prévues sur une surface circonférentielle intérieure de l'élément tubulaire externe (51), au moins deux cliquets d'embrayage (61) espacés de façon circonférentielle l'un de l'autre autour de la circonférence de côté externe de l'élément tubulaire interne (50) et capables de se déplacer librement entre une position d'engagement dans laquelle les cliquets d'embrayage (61) s'engagent dans les dents de rochet (60) pour transmettre un couple de l'élément tubulaire externe (51) à l'élément tubulaire interne (50) et une position de dégagement dans laquelle les cliquets d'embrayage (61) sont dégagés des dents de rochet (60), chaque cliquet d'embrayage (61) incluant une partie semblable à une griffe (63) configurée pour s'engrener de façon sélective avec les dents de rochet (60) et une partie d'engagement de ressort (64) ; et
un premier et un deuxième élément d'application de force (62a, 62b) capables de fonctionner pour appliquer des forces contre des cliquets d'embrayage (61) alternés parmi ceux-ci, respectivement, pour pousser les cliquets d'embrayage (61) dans une direction dont l'orientation s'éloigne de la circonférence de côté externe de l'élément tubulaire interne (50) et va vers les positions d'engagement, les parties d'engagement de ressort (64) de chaque cliquet d'embrayage (61) étant capables de s'engager dans un élément d'application de force parmi le premier et le deuxième élément d'application de force (62a, 62b),
**caractérisé en ce que** la partie d'engagement de ressort (64) de chaque cliquet d'embrayage (61) est arrangée sur un côté de la partie semblable à une griffe (63), et les parties d'engagement de ressort (64) des cliquets d'embrayage adjacents (61) sont prévues sur des côtés opposés des parties semblables à des griffes (63).

2. Une roue libre pour bicyclette (43) comprenant un mécanisme de transmission de rotation unidirectionnelle tel qu'énoncé dans la revendication 1.

3. Une roue libre pour bicyclette (43) tel qu'énoncé dans la revendication 2 comprenant une paire d'assemblages formant paliers (52a, 52b) disposés entre l'élément tubulaire interne (50) et l'élément tubulaire externe (51) pour coupler l'élément tubulaire externe (51) à l'élément tubulaire interne (50) de manière rotative de façon à ce que l'élément tubulaire externe (51) puisse tourner librement par rapport à l'élément tubulaire interne (50).

4. La roue libre pour bicyclette (43) tel qu'énoncé dans la revendication 2 ou la revendication 3, dans laquelle
l'élément tubulaire externe (51) inclut une partie de montage de pignon (51 a) sur une surface circonférentielle extérieure de l'élément tubulaire externe (51), la partie de montage de pignon (51 a) étant configurée pour qu'un pignon soit monté sur celle-ci de façon à ce que le pignon tourne d'une seule pièce avec l'élément tubulaire externe (51) ; et
l'élément tubulaire interne (50) est configuré et arrangé pour pouvoir être fixé sur un corps de moyeu (41) de façon à ce que l'élément tubulaire interne (50) puisse tourner librement d'une seule pièce avec le corps de moyeu (41) autour de l'essieu de moyeu (40).

5. La roue libre pour bicyclette (43) tel qu'énoncé dans la revendication 3, dans laquelle
les dents de rochet (60) et les cliquets d'embrayage (61) sont arrangés entre les assemblages formant paliers (52a, 52b).

6. La roue libre pour bicyclette (43) tel qu'énoncé dans n'importe lesquelles des revendications 2 à 5, dans laquelle
deux cliquets d'embrayage adjacents (61) sont espacés l'un de l'autre d'une première distance angulaire γ1 qui est plus grande que d'autres distances angulaires β1 entre n'importe quelle autre paire de cliquets d'embrayage des cliquets d'embrayage (61).

7. La roue libre pour bicyclette (43) tel qu'énoncé dans la revendication 6, dans laquelle
les autres distances angulaires β1 entre chaque paire adjacente des autres paires adjacentes des cliquets d'embrayage (61) parmi les cliquets d'embrayage sont égales entre elles.

8. La roue libre pour bicyclette (43) tel qu'énoncé dans n'importe lesquelles des revendications 2 à 7, dans laquelle
les cliquets d'embrayage (61) et les dents de rochet (60) sont configurés et arrangés de façon à ce que le nombre maximum des cliquets d'embrayage (61) qui s'engrènent simultanément avec les dents de rochet (60) est le nombre total des cliquets d'embrayage (61) moins un.

9. La roue libre pour bicyclette (43) tel qu'énoncé dans n'importe lesquelles des revendications 2 à 8, dans laquelle
le nombre maximum des cliquets d'embrayage (61) qui s'engrènent simultanément avec les dents de rochet (60) est de deux.

10. La roue libre pour bicyclette (43) tel qu'énoncé dans n'importe lesquelles des revendications 2 à 8, dans laquelle
le nombre maximum des cliquets d'embrayage (61) qui s'engrènent simultanément avec les dents de rochet (60) est de un.

11. Un moyeu pour bicyclette (12) comprenant :
un essieu de moyeu (40) configuré et arrangé pour être sécurisé à un cadre (102) d'une bicyclette (101) ;
un corps de moyeu (41) soutenu de façon rotative autour d'une circonférence extérieure de l'essieu de moyeu (40) ; et
une roue libre pour bicyclette (43) tel qu'énoncé dans n'importe lesquelles des revendications 2 à 10.
